# EUROPÄISCHE PATENTANMELDUNG

(11) **EP 3 450 015 A1**
(43) Veröffentlichungstag der Anmeldung: **06.03.2019**
(21) Anmeldenummer: 17188772.2
(22) Anmeldetag: 31.08.2017
(51) Int. Cl.: B01J 29/74, B01J 29/56, B01J 29/76, B01J 35/04, B01J 37/02, B01D 53/94, B01J 29/83, B01J 29/85, B01J 37/08, B01J 37/00

(54) **PALLADIUM-ZEOLITH-BASIERTER PASSIVER STICKOXID-ADSORBER-KATALYSATOR ZUR ABGASREINIGUNG**

(71) Anmelder: UMICORE AG & CO. KG, 63457 Hanau-Wolfgang (DE)
(72) Erfinder: HENGST, Christoph, 35510 Butzbach (DE); SCHUETZE, Frank-Walter, 63739 Aschaffenburg (DE); LENNARTZ, Michael, 60435 Frankfurt (DE)

(57) **Zusammenfassung**

Die vorliegende Erfindung betrifft einen Katalysator (Passiver Stickoxid-Adsorber), der ein Trägersubstrat, Palladium und einen Zeolithen, dessen größte Kanäle von 6 tetraedrisch koordinierten Atomen gebildet werden, insbesondere des Strukturtyps SOD, umfasst, sowie ein diesen und einen SCR-Katalysator enthaltendes Abgassystem.

## Beschreibung

Die vorliegende Erfindung betrifft einen passiven Stickoxid-Adsorber zur passiven Einlagerung von Stickoxiden aus dem Abgas eines Verbrennungsmotors, der einen mit Palladium belegten Zeolithen umfasst, dessen größte Kanäle von 6 tetraedrisch koordinierten Atomen gebildet werden

Das Abgas von Kraftfahrzeugen, die mit mager betriebenen Verbrennungsmotoren, beispielsweise mit Dieselmotoren, betrieben werden, enthält neben Kohlenmonoxid (CO) und Stickoxiden (NOₓ) auch Bestandteile, die aus der unvollständigen Verbrennung des Kraftstoffs im Brennraum des Zylinders herrühren. Dazu gehören neben Rest-Kohlenwasserstoffen (HC), die meist ebenfalls überwiegend gasförmig vorliegen, Partikelemissionen, auch als "Dieselruß" oder "Rußpartikel" bezeichnet. Dabei handelt es sich um komplexe Agglomerate aus überwiegend Kohlenstoff-haltigen FeststoffTeilchen und einer anhaftenden Flüssigphase, die meist mehrheitlich aus längerkettigen Kohlenwasserstoff-Kondensaten besteht. Die auf den festen Bestandteilen anhaftende Flüssigphase wird auch als "Soluble Organic Fraction SOF" oder "Volatile Organic Fraction VOF" bezeichnet.

Zur Reinigung dieser Abgase müssen die genannten Bestandteile möglichst vollständig in unschädliche Verbindungen umgewandelt werden, was nur unter Einsatz geeigneter Katalysatoren möglich ist.

Rußpartikel können sehr effektiv mit Hilfe von Partikelfiltern aus dem Abgas entfernt werden. Besonders bewährt haben sich Wandflussfilter aus keramischen Materialien. Diese sind aus einer Vielzahl von parallelen Kanälen aufgebaut, die durch poröse Wände gebildet werden. Die Kanäle sind wechselseitig an einem der beiden Enden des Filters verschlossen, so dass erste Kanäle gebildet werden, die an der ersten Seite des Filters offen und auf der zweiten Seite des Filters verschlossen sind, sowie zweite Kanäle, die an der ersten Seite des Filters verschlossen und auf der zweiten Seite des Filters offen sind. Das beispielsweise in die ersten Kanäle einströmende Abgas kann den Filter nur über die zweiten Kanäle wieder verlassen und muss zu diesem Zweck durch die porösen Wände zwischen den ersten und zweiten Kanälen durchfließen. Beim Durchtritt des Abgases durch die Wand werden die Partikel zurückgehalten.
Es ist bekannt, dass Partikelfilter mit katalytisch aktiven Beschichtungen versehen werden können. So beschreibt beispielsweise die EP1820561 A1 die Beschichtung eines Dieselpartikelfilters mit einer Katalysatorschicht, die das Abbrennen der gefilterten Rußpartikel erleichtert.

Ein bekanntes Verfahren zur Entfernung von Stickoxiden aus Abgasen in Gegenwart von Sauerstoff ist die selektive katalytische Reduktion (SCR-Verfahren) mittels Ammoniak an einem geeigneten Katalysator. Bei diesem Verfahren werden die aus dem Abgas zu entfernenden Stickoxide mit Ammoniak zu Stickstoff und Wasser umgesetzt.
Als SCR-Katalysatoren können beispielsweise Eisen- und insbesondere Kupfer-ausgetauschte Zeolithe verwendet werden, siehe zum Beispiel WO2008/106519 A1, WO2008/118434 A1 und WO2008/132452 A2. SCR-Katalysatoren für die Umsetzung von Stickoxiden mit Ammoniak enthalten keine Edelmetalle, insbesondere kein Platin und kein Palladium. In Gegenwart dieser Metalle würde nämlich die Oxidation von Ammoniak mit Sauerstoff zu Stickoxiden bevorzugt ablaufen und die SCR-Reaktion (Umsetzung von Ammoniak mit Stickoxid) ins Hintertreffen geraten. Soweit in der Literatur bisweilen von Platin- bzw. Palladium-ausgetauschten Zeolithen als "SCR-Katalysatoren" die Rede ist, so bezieht sich dies nicht auf die NH₃-SCR-Reaktion, sondern auf die Reduktion von Stickoxiden mittels Kohlenwasserstoffen. Allerdings ist letztgenannte Umsetzung nur wenig selektiv, so dass sie statt "SCR-Reaktion" zutreffender "HC-DeNOx-Reaktion" genannt wird.
Der als Reduktionsmittel verwendete Ammoniak kann durch Eindosierung einer Ammoniakvorläuferverbindung, wie beispielsweise Harnstoff, Ammoniumcarbamat oder Ammoniumformiat, in den Abgasstrang und anschließende Hydrolyse verfügbar gemacht werden.

SCR-Katalysatoren haben den Nachteil, dass sie erst ab einer Abgastemperatur von ca. 180 bis 200°C arbeiten und somit Stickoxide, die in der Kaltstartphase des Motors gebildet werden, nicht umsetzen.

Zur Entfernung der Stickoxide sind daneben sogenannte Stickoxid-Speicherkatalysatoren, für die auch der Begriff "Lean NOx Trap" oder "LNT" üblich ist, bekannt. Deren Reinigungswirkung beruht darauf, dass in einer mageren Betriebsphase des Motors die Stickoxide vom Speichermaterial des Speicherkatalysators vorwiegend in Form von Nitraten gespeichert werden und diese in einer darauf folgenden fetten Betriebsphase des Motors wieder zersetzt und die so freiwerdenden Stickoxide mit den reduzierenden Abgasanteilen am Speicherkatalysator zu Stickstoff, Kohlendioxid und Wasser umgesetzt werden. Diese Arbeitsweise ist beispielsweise in der SAE-Schrift SAE 950809 beschrieben.
Als Speichermaterialien kommen insbesondere Oxide, Carbonate oder Hydroxide von Magnesium, Calcium, Strontium, Barium, der Alkalimetalle, der Seltenerdmetalle oder Mischungen davon in Frage. Diese Verbindungen sind aufgrund ihrer basischen Eigenschaften in der Lage, mit den sauren Stickoxiden des Abgases Nitrate zu bilden und sie auf diese Weise abzuspeichern. Sie sind zur Erzeugung einer großen Wechselwirkungsfläche mit dem Abgas in möglichst hoher Dispersion auf geeigneten Trägermaterialien abgeschieden. Stickoxid-Speicherkatalysatoren enthalten darüber hinaus in der Regel Edelmetalle wie Platin, Palladium und/oder Rhodium als katalytisch aktive Komponenten. Deren Aufgabe ist es einerseits, unter mageren Bedingungen NO zu NO₂, sowie CO und HC zu CO₂ zu oxidieren und andererseits während der fetten Betriebsphasen, in denen der Stickoxid-Speicherkatalysator regeneriert wird, freigesetztes NO₂ zu Stickstoff zu reduzieren.
Moderne Stickoxid-Speicherkatalysatoren sind beispielsweise in EP0885650 A2, US2009/320457, WO2012/029050 A1 und WO2016/020351 A1 beschrieben.

Es ist bereits bekannt, Rußpartikelfilter und Stickoxid-Speicherkatalysatoren zu kombinieren. So beschreiben beispielsweise die EP1420 149 A2 und die US2008/141661 Systeme aus einem Dieselpartikelfilter und einem abströmseitig angeordneten Stickoxid-Speicherkatalysator.

Darüber hinaus ist bereits in beispielsweise EP1393069 A2, EP1433519 A1, EP2505803 A2 und US2014/322112 vorgeschlagen worden, Partikelfilter mit Stickoxid-Speicherkatalysatoren zu beschichten.
Die US2014/322112 beschreibt eine Zonierung der Beschichtung des Partikelfilters mit Stickoxid-Speicherkatalysator dergestalt, dass sich eine Zone ausgehend vom anströmseitigen Ende des Partikelfilters in den Eingangskanälen und eine andere Zone ausgehend vom abströmseitigen Ende des Partikelfilters in den Ausgangskanälen befindet.
Die in der SAE-Schrift SAE 950809 beschriebene Arbeitsweise, bei der Stickoxide von einem Stickoxid-Speicherkatalysator in einer mageren Betriebsphase des Motors gespeichert und in einer darauf folgenden fetten Betriebsphase wieder freigesetzt werden, wird auch als aktive Stickoxid-Speicherung bezeichnet.
Daneben ist auch ein als passive Stickoxid-Speicherung bekanntes Verfahren beschrieben worden. Dabei werden Stickoxide in einem ersten Temperaturbereich gespeichert und in einem zweiten Temperaturbereich wieder freigesetzt, wobei der zweite Temperaturbereich bei höheren Temperaturen liegt als der erste Temperaturbereich. Zur Durchführung dieses Verfahrens werden passive Stickoxid-Speicherkatalysatoren verwendet, die auch als PNA (für "passive NOx-Adsorber") bezeichnet werden.
Mittels passiver Stickoxid-Speicherkatalysatoren können Stickoxide insbesondere bei Temperaturen unter 200°C, bei denen ein SCR-Katalysator seine Betriebstemperatur noch nicht erreicht hat, gespeichert werden und wieder freigesetzt werden, sobald der SCR-Katalysator betriebsbereit ist. Somit wird durch die Zwischenspeicherung der vom Motor emittierten Stickoxide unterhalb von 200°C, sowie die konzertierte Freisetzung jener Stickoxide oberhalb von 200°C eine gesteigerte Gesamt-Stickoxid-Umsetzung des Abgasnachbehandlungssystems realisiert.

Als passiver Stickoxid-Speicherkatalysator ist auf Ceroxid geträgertes Palladium beschrieben worden, siehe zum Beispiel WO2008/047170 A1 und WO2014/184568 A1, das gemäß WO2012/071421 A2 und WO2012/156883 A1 auch auf einen Partikelfilter beschichtet werden kann.
Aus WO2012/166868 A1 ist bekannt, als passiven Stickoxid-Speicherkatalysator einen Zeolithen zu verwenden, der beispielsweise Palladium und ein weiteres Metall, wie zum Beispiel Eisen, enthält.
Die WO2015/085303 A1 offenbart passive Stickoxid-Speicherkatalysatoren, die ein Edelmetall und ein kleinporiges Molekularsieb mit einer maximalen Ringgröße von acht tetraedrischen Atomen enthalten.

Moderne und zukünftige Dieselmotoren werden immer effizienter, wodurch auch die Abgastemperaturen sinken. Parallel dazu werden die Gesetzgebungen hinsichtlich des Umsatzes von Stickoxiden kontinuierlich strenger. Dies führt dazu, dass SCR-Katalysatoren alleine nicht mehr ausreichen, um die Stickoxid-Grenzwerte einzuhalten. Es besteht insbesondere weiter Bedarf nach technischen Lösungen, die gewährleisten, dass in der Kaltstartphase des Motors gebildete Stickoxide nicht in die Umwelt entweichen.

Es wurde nun gefunden, dass mit Palladium belegte Zeolithe, deren größte Kanäle von 6 tetraedrisch koordinierten Atomen gebildet werden, hervorragende passive Stickoxidadsorbereigenschaften aufweisen.

Die vorliegende Erfindung betrifft demnach einen Katalysator, der ein Trägersubstrat der Länge L, Palladium und einen Zeolithen, dessen größte Kanäle von 6 tetraedrisch koordinierten Atomen gebildet werden, umfasst.

Zeolithe sind zwei- oder dreidimensionale Strukturen, als deren kleinste Strukturen SiO₄- und AlO₄-Tetraeder angesehen werden können. Diese Tetraeder fügen sich zu größeren Strukturen zusammen, wobei jeweils zwei über ein gemeinsames Sauerstoffatom verbunden sind. Dabei können Ringe verschiedener Größe gebildet werden, beispielsweise Ringe aus vier, sechs oder auch neun tetraedrisch koordinierten Silizium- oder Aluminiumatomen. Die verschiedenen Zeolithtypen werden häufig über die größte Ringgröße definiert, weil diese Größe bestimmt, welche Gastmoleküle in die Zeolithstruktur eindringen können und welche nicht. Es ist geläufig, großporige Zeolithe mit einer maximalen Ringgröße von 12, mittelporige Zeolithe mit einer maximalen Ringgröße von 10 und kleinporige Zeolithe mit einer maximalen Ringgröße von 8 zu unterscheiden.
Zeolithe werden des Weiteren von der Strukturkommision der International Zeolite Association in Strukturtypen unterteilt, die jeweils mit einem Code aus drei Buchstaben belegt sind, siehe zum Beispiel Atlas of Zeolite Framework Types, Elsevier, 5. Auflage, 2001.

Der erfindungsgemäße Katalysator umfasst bevorzugt Zeolithe, deren größte Kanäle von 6 tetraedrisch koordinierten Atomen gebildet werden und die den Strukturtypen AFG, AST, DOH, FAR, FRA, GIU, LIO, LOS, MAR, MEP, MSO, MTN, NON, RUT, SGT, SOD, SVV, TOL oder UOZ angehören.

Ein Zeolith vom Strukturtyp AFG ist Afghanit. Zeolithe vom Strukturtyp AST sind AIPO-16 und Octadecasil. Ein Zeolith vom Strukturtyp DOH ist Docecasil 1H. Ein Zeolith vom Strukturtyp FAR ist Farneseit. Ein Zeolith vom Strukturtyp FRA ist Franzinit. Ein Zeolith vom Strukturtyp GIU ist Giuseppettit. Ein Zeolith vom Strukturtyp LIO ist Liottit. Zeolithe vom Strukturtyp LOS sind Losod und Bystrit. Ein Zeolith vom Strukturtyp MAR ist Marinellit. Ein Zeolith vom Strukturtyp MEP ist Melanophlogit. Zeolithe vom Strukturtyp MSO sind MCM-61 und Mu-13. Zeolithe vom Strukturtyp MTN sind ZSM-39, CF-4, Docecasil-3C und Holdstit. Zeolithe vom Strukturtyp NON sind Nonasil, CF-3 und ZSM-51. Zeolithe vom Strukturtyp RUT sind RUB-10 und Nu-1. Ein Zeolith vom Strukturtyp SGT ist Sigma-2. Zeolithe vom Strukturtyp SOD sind Sodalith, AIPO-20, Bicchulit, Danalit, G, Genthelvit, Hauyn, Herlvin, Nosean, SIZ-9, TMA und Tugtupit. Ein Zeolith vom Strukturtyp UOZ ist IM-10.

Der erfindungsgemäße Katalysator umfasst besonders bevorzugt Zeolithe, deren größte Kanäle von 6 tetraedrisch koordinierten Atomen gebildet werden und die dem Strukturtyp SOD angehören.
Besonders geeignete Zeolithe, die dem Strukturtyp SOD angehören sind literaturbekannt. So ist zum Beispiel die Synthese von AIPO-20 in US 4,310,440 beschrieben.

Der erfindungsgemäße Katalysator umfasst Palladium. Das Palladium liegt dabei bevorzugt als Palladium-Kation in der Zeolithstruktur vor, das heißt in ionenausgetauschter Form. Das Palladium kann aber auch ganz oder teilweise als Palladium-Metall und/oder als Palladium-Oxid in der ZeolithStruktur und/oder auf der Oberfläche der Zeolithstruktur vorliegen.
Das Palladium kann in Mengen von 0,01 bis 20 Gew.-% vorliegen, bezogen auf die Summe der Gewichte von Zeolith und Palladium und berechnet als Palladium-Metall.
Bevorzugt liegt Palladium in Mengen von 0,5 bis 10, besonders bevorzugt von 0,5 bis 4 Gew.-% und ganz besonders bevorzugt 0,5 bis 2 Gew.-% vor, bezogen auf die Summe der Gewichte von Zeolith und Palladium und berechnet als Palladium-Metall.

Der erfindungsgemäße Katalysator umfasst einen Tragkörper. Dieser kann ein Durchflusssubstrat oder ein Wandflussfilter sein.
Ein Wandflussfilter ist ein Tragkörper, der Kanäle der Länge L umfasst, die sich parallel zwischen einem ersten und einem zweiten Ende des Wandflussfilters erstrecken, die abwechselnd entweder am ersten oder am zweiten Ende verschlossen sind und die durch poröse Wände getrennt sind. Ein Durchflusssubstrat unterscheidet sich von einem Wandflussfilter insbesondere darin, dass die Kanäle der Länge L an seinen beiden Enden offen sind.
Wandflussfilter weisen in unbeschichtetem Zustand beispielsweise Porositäten von 30 bis 80, insbesondere 50 bis 75% auf. Ihre durchschnittliche Porengröße beträgt in unbeschichtetem Zustand beispielsweise 5 bis 30 Mikrometer.
In der Regel sind die Poren des Wandflussfilters sogenannte offene Poren, das heißt sie haben eine Verbindung zur den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Durchflusssubstrate sind dem Fachmann ebenso wie Wandflussfilter bekannt und sind am Markt erhältlich. Sie bestehen beispielsweise aus Silicium-Carbid, Aluminium-Titanat oder Cordierit.

Der erfindungsgemäße Katalysator umfasst in einer Ausführungsform außer Palladium kein weiteres Metall, insbesondere weder Kupfer, noch Eisen, noch Platin.

In einer weiteren Ausführungsform des erfindungsgemäßen Katalysators liegen der Zeolith und das Palladium in Form einer Beschichtung auf dem Trägersubstrat vor. Dabei kann sich die Beschichtung über die gesamte Länge L des Trägersubstrates oder nur über einen Teil davon erstrecken.

Im Falle eines Wandflussfilters kann sich die Beschichtung auf den Oberflächen der Eingangskanäle, auf den Oberflächen der Ausgangskanäle und/oder in der porösen Wand zwischen Ein- und Ausgangskanälen befinden.

Erfindungsgemäße Katalysatoren, bei denen der Zeolith und das Palladium in Form einer Beschichtung auf dem Trägersubstrat vorliegen, können nach dem Fachmann geläufigen Methoden hergestellt werden, so etwa nach den üblichen Tauchbeschichtungsverfahren bzw. Pump- und Saug-Beschichtungsverfahren mit sich anschließender thermischer Nachbehandlung (Kalzination). Dem Fachmann ist bekannt, dass im Falle von Wandflussfiltern deren durchschnittliche Porengröße und die mittlere Teilchengröße der zu beschichtenden Materialien so aufeinander abgestimmt werden können, dass diese auf den porösen Wänden, die die Kanäle des Wandflussfilters bilden, liegen (auf-Wand-Beschichtung). Die mittlere Teilchengröße der zu beschichtenden Materialien kann aber auch so gewählt werden, dass sich diese in den porösen Wänden, die die Kanäle des Wandflussfilters bilden, befinden, dass also eine Beschichtung der inneren Porenoberflächen erfolgt (in-Wand-Beschichtung). In diesem Fall muss die mittlere Teilchengröße der der zu beschichtenden Materialien klein genug sein, um in die Poren des Wandflussfilters einzudringen.

In einer Ausführungsform der vorliegenden Erfindung liegen der Zeolith und das Palladium über die gesamte Länge L des Trägersubstrats beschichtet vor, wobei sich keine weitere katalytisch aktive Beschichtung auf dem Trägersubstrat befindet.

In anderen Ausführungsformen der vorliegenden Erfindung kann das Trägersubstrat aber auch eine oder mehrere weitere katalytisch aktive Beschichtungen tragen.

Beispielsweise kann das Trägersubstrat neben einer Beschichtung, die den Zeolithen und das Palladium umfasst eine weitere Beschichtung umfassen, die oxidationskatalytisch aktiv ist.
Die oxidationskatalytisch aktive Beschichtung umfasst beispielsweise Platin, Palladium oder Platin und Palladium auf einem Trägermaterial. Im letztgenannten Fall liegt das Masseverhältnis von Platin zu Palladium beispielsweise bei 4 : 1 bis 14 : 1.
Als Trägermaterial kommen alle dem Fachmann für diesen Zweck geläufigen Materialien in Betracht. Sie weisen eine BET-Oberfläche von 30 bis 250 m²/g, bevorzugt von 100 bis 200 m²/g auf (bestimmt nach DIN 66132) und sind insbesondere Aluminiumoxid, Siliziumoxid, Magnesiumoxid, Titanoxid, sowie Mischungen oder Mischoxide von mindestens zwei dieser Materialien. Bevorzugt sind Aluminiumoxid, Magnesium/Aluminium-Mischoxide und Aluminium/Silizium-Mischoxide. Sofern Aluminiumoxid verwendet wird, so ist es besonders bevorzugt stabilisiert, beispielsweise mit 1 bis 6 Gew.-%, insbesondere 4 Gew.-%, Lanthanoxid.
Die den Zeolithen und das Palladium umfassende Beschichtung (nachstehend Beschichtung A genannt) und die oxidationskatalytisch aktive Beschichtung (nachstehend Beschichtung B genannt) können auf dem Trägersubstrat in verschiedener Weise angeordnet sein.
Ist das Trägersubstrat ein Durchflusssubstrat so können beispielsweise beide Beschichtungen über die gesamte oder nur über einen Teil der Länge L des Trägersubstrats beschichtet vorliegen.

Beispielsweise kann sich Beschichtung A ausgehend von einem Ende des Tragkörpers auf 10 bis 80% seiner Länge L und Beschichtung B ausgehend vom anderen Ende des Tragkörpers 10 bis 80% seine Länge L_{A} erstrecken. Es kann in diesem Fall sein, dass L = L_{A} + L_{B} gilt, wobei L_{A} die Länge der Beschichtung A und L_{B} die Länge der Beschichtung B ist. Es kann aber auch L < L_{A} + L_{B} gelten. In diesem Fall überlappen sich die Beschichtungen A und B. Schließlich kann auch L > L_{A} + L_{B} gelten, wenn ein Teil des Tragkörpers frei von Beschichtungen bleibt. Im letztgenannten Fall bleibt zwischen den Beschichtungen A und B ein Spalt, der mindestens 0,5 cm lang ist, also beispielsweise 0,5 bis 1 cm.

Die Beschichtungen A und B können aber auch beide über die gesamte Länge L beschichtet sein. In diesem Fall kann beispielsweise die Beschichtung B direkt auf dem Trägersubstrat und die Beschichtung A auf Beschichtung B vorliegen. Alternativ kann auch die Beschichtung A direkt auf dem Trägersubstrat und die Beschichtung B auf Beschichtung A vorliegen.

Es ist darüber hinaus möglich, dass sich eine Beschichtung über die gesamte Länge des Tragkörpers erstreckt und die andere nur über einen Teil davon.

In einer bevorzugten Ausführungsform liegt ein mit 1 bis 2 Gew.-% Palladium belegter Zeolith vom Strukturtyp SOD direkt auf dem Trägersubstrat über dessen gesamte Länge L und auf dieser Beschichtung liegt eine Platin oder Platin und Palladium im Masseverhältnis von 4:1 bis 14:1 enthaltende Beschichtung ebenfalls über die gesamte Länge L. Insbesondere liegt dabei die untere Schicht (Pd-SOD) in einer Menge von 50 bis 250 g/l Trägersubstrat und die obere Schicht (Pt oder Pt/Pd) in einer Menge von 50 bis 100 g/l Trägersubstrat vor.

Ist das Trägersubstrat ein Wandflussfilter, so können sich die Beschichtungen A und B in analoger Weise wie oben für Durchflusssubstrate beschrieben über die gesamte Länge L des Wandflussfilters oder nur über einen Teil davon erstrecken. Daneben können sich die Beschichtungen auf den Wänden der Eingangskanäle, auf den Wänden der Ausgangskanäle oder in den Wänden zwischen Ein- und Ausgangskanälen liegen.

In einer anderen Ausführungsform der vorliegenden Erfindung ist das Trägersubstrat aus dem Zeolithen, dessen größte Kanäle von 6 tetraedrisch koordinierten Atomen gebildet werden, Palladium und einer Matrixkomponente gebildet.
Trägersubstrate, Durchflusssubstrate ebenso wie Wandflussfilter, die nicht nur aus inertem Material, wie beispielsweise Cordierit bestehen, sondern die daneben auch ein katalytisch aktives Material enthalten, sind dem Fachmann bekannt. Zu ihrer Herstellung wird eine Mischung aus beispielsweise 10 bis 95 Gew.-% inerter Matrixkomponente und 5 bis 90 Gew.-% katalytisch aktiven Materials nach an sich bekannten Verfahren extrudiert. Als Matrixkomponenten können dabei alle auch sonst zur Herstellung von Katalysatorsubstraten verwendeten inerten Materialien verwendet werden. Es handelt sich dabei beispielsweise um Silikate, Oxide, Nitride oder Carbide, wobei insbesondere Magnesium-Aluminium-Silikate bevorzugt sind.

Das extrudierte Trägersubstrat, das den Zeolithen, dessen größte Kanäle von 6 tetraedrisch koordinierten Atomen gebildet werden, sowie Palladium umfasst, kann in Ausführungsformen der vorliegenden Erfindung mit einer oder mehreren katalytisch aktiven Beschichtungen beschichtet sein, beispielsweise mit der oben beschriebenen oxidationskatalytisch aktiven Beschichtung.

Der erfindungsgemäße Katalysator eignet sich in hervorragender Weise als passiver Stickoxidspeicherkatalysator, d.h. er vermag bei Temperaturen von unter 200°C Stickoxide einzuspeichern und diese bei Temperaturen von über 200°C wieder auszuspeichern. Somit ist es in Kombination mit einem abströmseitigen SCR-Katalysator möglich, Stickoxide über den gesamten Temperaturbereich des Abgases, einschließlich der Kaltstarttemperaturen, wirkungsvoll umzusetzen.

Die vorliegende Erfindung betrifft somit auch ein Abgassystem, das
a) einen Katalysator, der ein Trägersubstrat der Länge L, Palladium und einen Zeolithen, dessen größte Kanäle von 6 tetraedrisch koordinierten Atomen gebildet werden, umfasst und
b) einen SCR-Katalysator
umfasst.

Der SCR-Katalysator im erfindungsgemäßen Abgassystem kann prinzipiell ausgewählt sein aus allen in der SCR-Reaktion von Stickoxiden mit Ammoniak aktiven Katalysatoren, insbesondere aus solchen, die dem Fachmann auf dem Gebiet der Autoabgaskatalyse als gebräuchlich bekannt sind. Dies schließt Katalysatoren vom Mischoxid-Typ ebenso ein, wie Katalysatoren auf Basis von Zeolithen, insbesondere von Übergangsmetallausgetauschten Zeolithen.

In Ausführungsformen der vorliegenden Erfindung werden SCR-Katalysatoren, die einen kleinporigen Zeolithen mit einer maximalen Ringgröße von acht tetraedrischen Atomen und ein Übergangsmetall enthalten, verwendet. Solche SCR-Katalysatoren sind beispielsweise in WO2008/106519 A1, WO2008/118434 A1 und WO2008/132452 A2 beschrieben.
Daneben können aber auch groß- und mittelporige Zeolithe verwendet werden, wobei insbesondere solche vom Strukturtyp BEA in Frage kommen. So sind Eisen-BEA und Kupfer-BEA von Interesse.

Besonders bevorzugte Zeolithe gehören den Gerüsttypen BEA, AEI, CHA, KFI, ERI, LEV, MER oder DDR an und sind besonders bevorzugt mit Kobalt, Eisen, Kupfer oder Mischungen aus zwei oder drei dieser Metalle ausgetauscht.

Unter den Begriff Zeolithe fallen hier auch Molsiebe, die bisweilen auch als "zeolithähnliche" Verbindungen bezeichnet werden. Molsiebe sind bevorzugt, wenn sie einem der oben genannten Gerüsttypen angehören. Beispiele sind Silicaaluminiumphosphat-Zeolithe, die unter dem Begriff SAPO bekannt sind und Aluminiumphosphat-Zeolithe, die unter dem Begriff AIPO bekannt sind.
Auch diese sind insbesondere dann bevorzugt, wenn sie mit Kobalt, Eisen, Kupfer oder Mischungen aus zwei oder drei dieser Metalle ausgetauscht sind.

Bevorzugte Zeolithe sind weiterhin solche, die einen SAR (silica-to-alumina ratio)-Wert von 2 bis 100, insbesondere von 5 bis 50, aufweisen.

Die Zeolithe bzw. Molsiebe enthalten Übergangsmetall insbesondere in Mengen von 1 bis 10 Gew.-%, insbesondere 2 bis 5 Gew.-%, berechnet als Metalloxid, also beispielsweise als Fe₂O₃ oder CuO.

Bevorzugte Ausführungsformen der vorliegenden Erfindung enthalten als SCR-Katalysatoren mit Kupfer, Eisen oder Kupfer und Eisen ausgetauschte Zeolithe oder Molsiebe vom Beta-Typ (BEA), Chabazit-Typ (CHA) oder vom Levyne-Typ (LEV). Entsprechende Zeolithe oder Molsiebe sind beispielsweise unter den Bezeichnungen ZSM-5, Beta, SSZ-13, SSZ-62, Nu-3, ZK-20, LZ-132, SAPO-34, SAPO-35, AIPO-34 und AIPO-35 bekannt, siehe etwa US 6,709,644 und US 8,617,474.
In einer Ausführungsform des erfindungsgemäßen Abgassystems befindet sich zwischen dem Katalysator, der ein Trägersubstrat der Länge L, Palladium und einen Zeolithen, dessen größte Kanäle von 6 tetraedrisch koordinierten Atomen gebildet werden und dem SCR-Katalysator eine Einspritzeinrichtung für Reduktionsmittel.
Die Einspritzvorrichtung kann vom Fachmann beliebig gewählt werden, wobei geeignete Vorrichtungen der Literatur entnommen werden können (siehe etwa T. Mayer, Feststoff-SCR-System auf Basis von Ammoniumcarbamat, Dissertation, TU Kaiserslautern, 2005). Der Ammoniak kann über die Einspritzvorrichtung als solches oder in Form einer Verbindung in den Abgasstrom eingebracht werden, aus der bei den Umgebungsbedingungen Ammoniak gebildet wird. Als solche kommen beispielsweise wässrige Lösungen von Harnstoff oder Ammoniumformiat in Frage, ebenso wie festes Ammoniumcarbamat. In der Regel wird das Reduktionsmittel bzw. ein Vorläufer davon in einem mitgeführten Behälter, der mit der Einspritzvorrichtung verbunden ist, vorrätig gehalten.

Der SCR-Katalysator liegt bevorzugt in Form einer Beschichtung auf einem Tragkörper vor, der ein Durchflusssubstrat oder ein Wandflussfilter sein und beispielsweise aus Silicium-Carbid, Aluminium-Titanat oder Cordierit bestehen kann.
Alternativ kann aber auch der Tragkörper selbst aus dem SCR-Katalysator und einer Matrixkomponente wie oben beschrieben bestehen, also in extrudierter Form vorliegen.

Die vorliegende Erfindung betrifft auch ein Verfahren zur Reinigung von Abgasen von Kraftfahrzeugen, die mit mager betriebenen Motoren, etwa Dieselmotoren, betrieben werden, das dadurch gekennzeichnet ist, dass das Abgas über ein erfindungsgemäßes Abgassystem geleitet wird.

### Beispiel 1

a) Ein Zeolith vom Typ AIPO-20 (Strukturtyp SOD) wird mit 3 Gew.-% Palladium (aus kommerziell erhältlichem Palladium-Nitrat) imprägniert ("incipient wetness"). Das so erhaltene Pulver wird anschließend bei 120 °C getrocknet und bei 500 °C kalziniert.
b) Das erhaltene Pd-haltige, kalzinierte Pulver wird in VE-Wasser suspendiert, mit 8% eines kommerziell erhältlichen Binders auf Böhmit-Basis versetzt und mittels einer Kugelmühle gemahlen. Anschließend wird mit dem so erhaltenen Washcoat ein handelsübliches wabenförmiges Keramiksubstrat (Durchflusssubstrat) über dessen ganze Länge nach einem üblichen Verfahren beschichtet. Die Washcoat-Beladung beträgt 50 g/L, bezogen auf den Pd-haltigen Zeolithen (entspricht 54 g/L inkl. Binder), was einer Edelmetallbeladung von 42,5 g/ft³ Pd entspricht. Der so erhaltene Katalysator wird bei 550 °C kalziniert.

### Beispiel 2

Beispiel 1 wird wiederholt mit dem Unterscheid, dass das Keramiksubstrat mit 100 g/L Pd-haltigem Zeolithen beschichtet wird (entspricht 108 g/L inkl. Binder). Dies entspricht einer Edelmetallbeladung von 85 g/ft³ Pd.

### Beispiel 3

Beispiel 1 wird wiederholt mit dem Unterscheid, dass das Keramiksubstrat mit 200 g/L Pd-haltigem Zeolithen beschichtet wird (entspricht 216 g/L inkl. Binder). Dies entspricht einer Edelmetallbeladung von 170 g/ft³ Pd.

### Beispiel 4

Beispiel 2 wird wiederholt mit dem Unterschied, dass der Zeolith mit 1,5 Gew.-% Palladium imprägniert wird. Dies entspricht einer Edelmetallbeladung von 42,5 g/ft³ Pd.

### Beispiel 5

Beispiel 3 wird wiederholt mit dem Unterscheid, dass der Zeolith mit 1,5 Gew.-% Palladium imprägniert wird. Dies entspricht einer Edelmetallbeladung von 85 g/ft³ Pd.

### Beispiel 6

Beispiel 3 wird wiederholt mit dem Unterscheid, dass der Zeolith mit 0,75 Gew.-% Palladium imprägniert wird. Dies entspricht einer Edelmetallbeladung von 42,5 g/ft³ Pd.

### Beispiel 7

Der gemäß Beispiel 5 erhaltene Katalysator wird in einem weiteren Schritt nach einem üblichen Verfahren ebenfalls über seine ganze Länge mit einem Washcoat beschichtet, der Platin geträgert auf Aluminiumoxid enthält. Die Washcoatbeladung der zweiten Schicht beträgt 75 g/L, die Platinbeladung beträgt 20 g/ft³.

### Beispiel 8

Der Katalysator gemäß Beispiel 7 wird mit einem zweiten beschichteten Durchflusssubstrat zu einem Abgassystem kombiniert. Dabei ist das zweite Durchflusssubstrat mit einem mit 3 Gew.-% Kupfer (berechnet als CuO) ausgetauschten Zeolithen vom Strukturtyp Chabazit ausgetauscht. Die Washcoatbeladung des zweiten Durchflusssubstrates beträgt 150 g/L.

## Patentansprüche

1. Katalysator, der ein Trägersubstrat der Länge L, Palladium und einen Zeolithen, dessen größte Kanäle von 6 tetraedrisch koordinierten Atomen gebildet werden, umfasst.

2. Katalysator gemäß Anspruch 1, **dadurch gekennzeichnet, dass** der Zeolith dem Strukturtyp AFG, AST, DOH, FAR, FRA, GIU, LIO, LOS, MAR, MEP, MSO, MTN, NON, RUT, SGT, SOD, SVV, TOL oder UOZ angehört.

3. Katalysator gemäß Anspruch 1 und/oder 2, **dadurch gekennzeichnet, dass** der Zeolith dem Strukturtyp SOD angehört.

4. Katalysator gemäß einem oder mehreren der Ansprüche 1 bis 3, **dadurch gekennzeichnet, dass** das Palladium als Palladium-Kation in der Zeolithstruktur vorliegt.

5. Katalysator gemäß einem oder mehreren der Ansprüche 1 bis 4, **dadurch gekennzeichnet, dass** das Palladium in Mengen von 0,01 bis 20 Gew.-%, bezogen auf die Summe der Gewichte von Zeolith und Palladium und berechnet als Palladium-Metall, vorliegt.

6. Katalysator gemäß einem oder mehreren der Ansprüche 1 bis 5, **dadurch gekennzeichnet, dass** der Tragkörper ein Durchflusssubstrat oder ein Wandflussfilter ist.

7. Katalysator gemäß einem oder mehreren der Ansprüche 1 bis 6, **dadurch gekennzeichnet, dass** der Zeolith und das Palladium in Form einer Beschichtung auf dem Trägersubstrat vorliegen.

8. Katalysator gemäß Anspruch 7, **dadurch gekennzeichnet, dass** das Trägersubstrat eine weitere katalytisch aktive Beschichtung trägt.

9. Katalysator gemäß Anspruch 8, **dadurch gekennzeichnet, dass** die weitere katalytisch aktive Beschichtung eine oxidationskatalytisch aktive Beschichtung ist.

10. Katalysator gemäß Anspruch 9, **dadurch gekennzeichnet, dass** die oxidationskatalytisch aktive Beschichtung Platin, Palladium oder Platin und Palladium auf einem Trägermaterial umfasst.

11. Katalysator gemäß einem oder mehreren der Ansprüche 1 bis 10, **dadurch gekennzeichnet, dass** sich ein mit 1 bis 2 Gew.-% Palladium belegter Zeolith vom Typ SOD direkt auf dem Trägersubstrat über dessen gesamte Länge L erstreckt und sich auf dieser Beschichtung eine Platin oder Platin und Palladium im Masseverhältnis von 4:1 bis 14:1 enthaltende Beschichtung über die gesamte Länge L befindet.

12. Abgassystem, das
a) einen Katalysator, der ein Trägersubstrat der Länge L, Palladium und einen Zeolithen, dessen größte Kanäle von 6 tetraedrisch koordinierten Atomen gebildet werden, umfasst und
b) einen SCR-Katalysator
umfasst.

13. Abgassystem gemäß Anspruch 12, **dadurch gekennzeichnet, dass** der SCR-Katalysator ein Zeolith ist, der dem Gerüsttyp BEA, AEI, CHA, KFI, ERI, LEV, MER oder DDR angehört und der mit Kobalt, Eisen, Kupfer oder Mischungen aus zwei oder drei dieser Metalle ausgetauscht ist.

14. Abgassystem gemäß Anspruch 12 und/oder 13, **dadurch gekennzeichnet, dass** sich zwischen dem Katalysator, der ein Trägersubstrat der Länge L, Palladium und einen Zeolithen, dessen größte Kanäle von 6 tetraedrisch koordinierten Atomen gebildet werden, umfasst und dem SCR-Katalysator eine Einspritzeinrichtung für Reduktionsmittel befindet.

15. Verfahren zur Reinigung von Abgasen von Kraftfahrzeugen, die mit mager betriebenen Motoren betrieben werden, **dadurch gekennzeichnet, dass** das Abgas über ein Abgassystem gemäß einem oder mehreren der Ansprüche 12 bis 14 geleitet wird.
